# EUROPEAN PATENT SPECIFICATION

(11) **EP 4 227 262 B1**
(45) Date of publication and mention of the grant of the patent: **11.09.2024**
(21) Application number: 22155933.9
(22) Date of filing: 09.02.2022
(51) Int. Cl.: C01B 32/05, C01B 32/205, C10B 49/02, C10B 53/02, B01J 6/00

(54) **SYSTEM FOR CARBONIZING ORGANIC MATERIAL**
SYSTEM ZUR KARBONISIERUNG VON ORGANISCHEM MATERIAL
SYSTÈME DE CARBONISATION DE MATÉRIAU ORGANIQUE

(43) Date of publication of application: 16.08.2023
(73) Proprietor: Carbo Culture Oy, 00180 Helsinki (FI)
(72) Inventor: Carstens, Christopher, New York, NY 12538 (US)
(74) Representative: Brand Murray Fuller LLP

(56) References cited:
- WO-A1-03/002690
- WO-A1-2009/042633
- WO-A2-2011/140401

## Description

### TECHNICAL FIELD

The present disclosure relates to system for carbonizing organic material. The present disclosure further relates to a method for carbonizing organic material. Also disclosed herein is a carbonization product comprising biocarbon formed in the system of the present disclosure or using the method of the present disclosure.

### BACKGROUND

Traditionally, organic material of different types has been known to be converted to charcoal or biocarbon using various processes. In most such processes the organic material is heated in an oxygen deficient or anaerobic atmosphere and the organic material is converted to char in a pyrolysis process.

However, performing pyrolysis at an industrial scale in an inert atmosphere to prevent combustion presents numerous technical challenges including heat transfer limitations and the production of undesirable tars and liquid products. The requirement for operating in an inert atmosphere adds significant mechanical complexity and limits overall reaction rates.

WO 2009/042633 A1 and WO03/002690 A1 disclose a low-energy input process for the pyrolytic conversion of biomass to charcoal or carbonized charcoal. WO 2011/140401 A2 discloses a system and method for the continuous production of carbonaceous pyrolysis products.

### SUMMARY

In a first aspect there is provided a system for carbonizing organic material. The system comprises:
a. a means for adding organic feedstock to a carbonization reactor,
b. a means for adding a gas comprising oxygen to the carbonization reactor,
c. a means for removing an oxygen-deficient gas from the carbonization reactor,
d. a means for initiating an exothermic reaction in the carbonization reactor, and
e. a means for removing a carbonization product from the carbonization reactor;
the system being characterized by at least two temperature sensors mounted at different heights of the carbonization reactor cannister.

In a second aspect there is provided a method for carbonizing organic material. The method comprises:
a. providing an organic feedstock to a carbonization reactor,
b. providing a gas comprising oxygen to the carbonization reactor,
c. initiating an exothermic reaction in the carbonization reactor, and
d. removing a carbonization product from the carbonization reactor;
characterized in that the method comprises utilizing at least two temperature sensors mounted at different heights of the carbonization reactor cannister.

Also disclosed herein is a carbonization product comprising biocarbon formed in the system of the present disclosure or using the method of the present disclosure.

Preferred embodiments of the invention are set out in the dependent claims herein.

### BRIEF DESCRIPTION OF THE DRAWINGS

The accompanying drawing, which is included to provide a further understanding of the embodiments and constitute a part of this specification, illustrates various embodiments. In the drawings:
Fig. 1 presents a block diagram of the primary components of a system for carbonizing organic material according to the present disclosure.
Fig. 2 present a system for carbonizing organic material according to an embodiment of the present disclosure.
Fig. 3 present a system for carbonizing organic material according to an embodiment of the present disclosure.
Fig. 4 presents temperature measurements over time in a system for carbonizing organic material according to an embodiment of the present disclosure.
Fig. 5 presents reactant weight loss over time in a system for carbonizing organic material according to an embodiment of the present disclosure.

### DETAILED DESCRIPTION

A system for carbonizing organic material is disclosed. The system comprises:
a. a means for adding organic feedstock to a carbonization reactor,
b. a means for adding a gas comprising oxygen to the carbonization reactor,
c. a means for removing an oxygen-deficient gas from the carbonization reactor,
d. a means for initiating an exothermic reaction in the carbonization reactor, and
e. a means for removing a carbonization product from the carbonization reactor;
the system being characterized by at least two temperature sensors mounted at different heights of the carbonization reactor cannister.

As used herein, the term "carbonization" refers to increasing the ratio of carbon to oxygen in the product relative to the starting organic feedstock. In certain embodiments, the term carbonization may refer to the conversion of an organic feedstock to a material consisting essentially of pure carbon. In certain embodiments, the term carbonization may refer to the conversion of an organic feedstock to charcoal, biochar, or biocarbon.

In certain embodiments, the system may be arranged to operate in a continuous or semi-batch manner.

In certain embodiments, the internal volume of the carbonization reactor is at greater than atmospheric pressure during the carbonization reaction.

In certain embodiments, addition of feedstock to the carbonization reactor is performed at greater than atmospheric pressure.

As used herein, "greater than atmospheric pressure" refers to an absolute pressure of more than 1.01325 bar.

In certain embodiments, the pressure in the carbonization reactor may be between 3 and 20 bar.

In certain embodiments, the organic feedstock is added to the carbonization reactor in a continuous manner.

As used herein, the term "continuous manner" refers to the addition of feedstock while the exothermic reaction is underway. Similarly, as used herein, the term "semi-batch manner" refers to the addition of feedstock before the initiation of the exothermic reaction. In certain embodiments, the carbonization product is removed from the carbonization reactor in a continuous or semi-batch manner.

In certain embodiments, the oxygen-deficient gas leaving the reactor is comprised of
- 0-60% nitrogen
- 10-50% CO₂
- 0-50% H₂
- 10-50% CO
- 0-20% CH₄
- 0-5% Ethane
- 0-5% Ethylene
- 0-5% Heavier hydrocarbons

In certain embodiments, the oxygen deficient gas comprises less than 5% O₂.

As used herein, the term "heavier hydrocarbons" refers to hydrocarbons consisting of three or more carbon atoms. Non-limiting examples of heavier hydrocarbons are propane, butane, propene, and butene.

As used herein, all percentages refer, unless explicitly stated otherwise, to a molar percentage of the composition.

In certain embodiments, the gas comprising oxygen is added to the carbonization reactor at greater than atmospheric pressure. In certain embodiments, the gas comprising oxygen may be air. In certain embodiments, the gas comprising oxygen may be a gas comprising more than 21% oxygen.

In certain embodiments, the gas comprising oxygen contains less than 21% oxygen. In certain embodiments, the gas comprising oxygen may be a gas where at least a portion of said gas originates from the oxygen-deficient gas outlet of a carbonization reactor.

In certain embodiments the gas comprising oxygen comprises less than 78% nitrogen.

In certain embodiments, the addition of organic feedstock is done at a rate to maintain a constant level of feedstock in the reactor. In certain embodiments, the rate of adding feedstock can be adjusted during the process to maintain an efficient carbonization process in the reactor. In one embodiment, the adding of feedstock is done under pressure. In one embodiment, the reactor is maintained at higher than atmospheric pressure when feedstock is added.

In certain embodiments, the organic feedstock may be derived from a biological process such as photosynthesis or chemosynthesis. In other embodiments the organic feedstock is derived from a fossil fuel such as plastic or rubber.

In certain embodiments, the organic feedstock is mixed with an inorganic material prior to addition to the reactor. In one embodiment, the feedstock is wet impregnated with an aqueous solution of an inorganic salt prior to addition to the reactor. In one embodiment, the feedstock is wet impregnated with an aqueous solution containing a metal salt prior to addition to the reactor.

In certain embodiments, the means for initiating an exothermic reaction in the carbonization reactor is located at the opposite end of the carbonization reactor relative to the input of the gas comprising oxygen.

In certain embodiments, the means for initiating an exothermic reaction in the carbonization reactor is an electric heating source. In certain embodiments, the means for initiating an exothermic reaction in the carbonization reactor may be any other means suitable for initiating the reaction. Non-limiting examples of suitable means are burners burning liquid or gaseous fuels.

In one embodiment, the energy required to initiate an exothermic reaction in the reactor is provided by leaving a remainder of the hot product in the bottom of the container.

In certain embodiments, the carbonization product is continuously removed from the carbonization reactor. In one embodiment, the reactor is maintained at higher than atmospheric pressure when removing the carbonization product. In one embodiment, the carbonization product is cooled or quenched with water during removal.

In certain embodiments, the pressure of the reactor is maintained by controlling the flow of the oxygen comprising gas relative to the flow of the oxygen-deficient gas.

In certain embodiments, the flow of oxygen comprising gas is controlled by adjusting the pressure of the oxygen comprising gas relative to the pressure of the carbonization reactor.

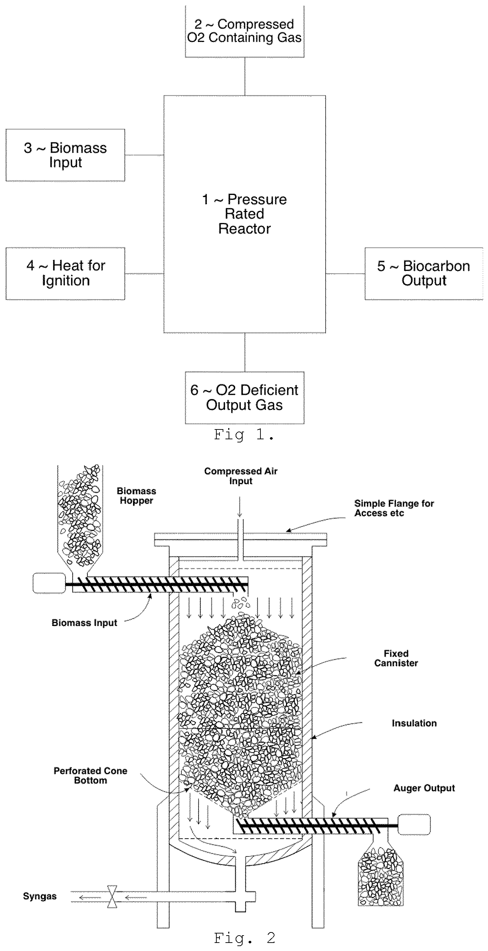

One embodiment of a system for carbonizing organic material is described in schematic form in Figure 1. A system according to Fig. 1 comprises:
1. A pressure rated reactor,
2. An input for a compressed gas comprising oxygen,
3. An input for a biomass feedstock,
4. A means for inputting energy to initiate an exothermic reaction in the reactor.
5. An output for the carbonization product, and
6. An output for the oxygen-deficient gas.

One embodiment of a system for carbonizing organic material is described in in Figure 2. A system according to Fig. 2 comprises a fixed reactor wherein the reactor walls include insulation. The reactor is open at the top and is closed before operation with a sealable, air-tight lid that, when sealed, can withstand internal pressures higher than atmospheric pressure. The lid of the reactor comprises an input for a gas comprising oxygen.

The biomass to be carbonized is fed into the reactor from a feedstock container at the top of the reactor using a suitable feeding means such as a screw or an auger. The feeding means feeds the biomass into the middle of the reactor so that it lands on top of the existing mass inside the reactor.

The reactor comprises a perforated cone at the lower end that collects the biomass and stops it from falling to the bottom of the reactor. The perforations in the cone allow the oxygen deficient gas to pass through but collect the carbonization product. At the bottom of the perforated cone, a feeding means removes carbonization product from the reactor and transports it to a storage container. The feeding means may be any suitable feeding means know to a skilled person such as a screw feeder or an auger. The oxygen deficient gas collected from the bottom of the reactor may be combusted for energy or used as a feedstock for a secondary process.

In one embodiment, the carbonization reaction occurs in the biomass during the time it passes from the top of the reactor to the perforated cone. In one embodiment, the reaction front remains relatively stationary in the vertical direction of the reactor and the biomass feedstock moves in a downward direction as the reaction progresses. In one embodiment, the reaction front is the thermal flame front of an exothermic reaction.

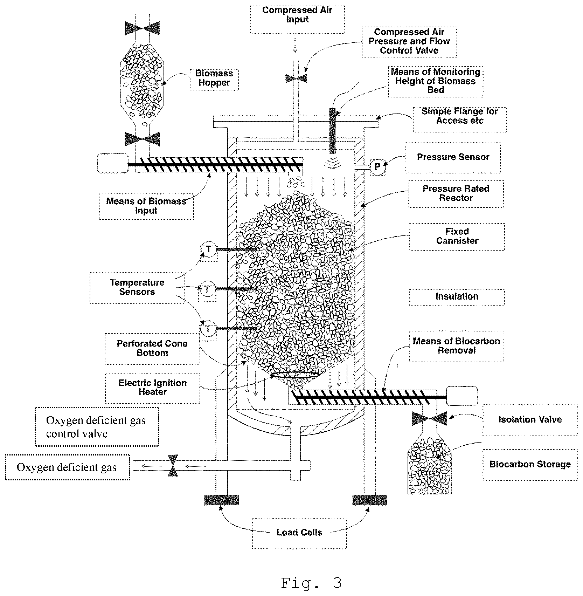

One embodiment of a system for carbonizing organic material is described in Figure 3. A system according to Fig. 3 comprises a fixed reactor wherein the reactor walls include insulation. The reactor is open at the top and is closed before operation with a sealable, air-tight lid that, when sealed, can withstand internal pressures higher than atmospheric pressure. The reactor comprises an input for a gas comprising oxygen and a means for monitoring the height of the biomass bed. The reactor also comprises a pressure sensor mounted through the wall of the reactor at the upper end of the reactor, above the surface of the biomass bed.

The biomass to be carbonized is fed into the reactor from a biomass hopper at the top of the reactor using a suitable feeding means such as a screw or an auger. The passage of the biomass into and out of the biomass hopper is controlled by isolation valves mounted above and below the biomass hopper that allow biomass to be fed into the reactor at above atmospheric pressure. The feeding means feeds the biomass into the middle of the reactor so that it lands on top of the existing mass inside the reactor.

The reactor comprises a perforated cone at the lower end that collects the biomass and stops it from falling to the bottom of the reactor. The perforations in the cone allow the oxygen deficient gas to pass through but collect the carbonization product. At the bottom of the perforated cone, a feeding means removes carbonization product from the reactor and transports it to a storage container. The feeding means may be any suitable feeding means known to a skilled person such as a screw feeder or an auger. The passage of the carbonization product into the storage container is controlled by an isolation valve. An isolation valve on the outlet of the product storage container allows the carbonization product to be removed from the pressurized system. The oxygen deficient gas collected from the bottom of the reactor may be combusted for energy or used as a feedstock in a secondary process.

In one embodiment, the carbonization reaction occurs in the biomass during the time it passes from the top of the reactor to the perforated cone at the bottom. In order to monitor the progression of the carbonization reaction, at least two temperature sensors are mounted at different heights of the carbonization reactor cannister to monitor the temperature within the biomass bed. In one embodiment, the reaction front remains relatively stationary in the vertical direction of the reactor and the biomass feedstock moves in a downward direction as the reaction progresses. In one embodiment, the reaction front is a thermal front created by the flame front of an exothermic reaction.

In certain embodiments, the removal of the oxygen deficient gas is controlled by a control valve.

In certain embodiments, mechanical energy is recovered from the oxygen deficient gas as it is reduced in pressure. In one embodiment mechanical energy is recovered from the oxygen deficient gas and used to increase the pressure of the gas comprising oxygen.

The system described in the current specification has the added utility of having properties suitable for the continuous or semi-batch carbonization of organic material. Operating the system in a continuous or semi-batch fashion eliminates the need for frequent loading and unloading of material to be carbonized as well as the carbonization product. Eliminating the need for frequent loading and unloading of material to be carbonized as well as the carbonization product enables running the carbonization for longer continuous time periods without the need for stopping the process for loading or unloading material.

As the carbonization in the system of the present disclosure operates in an atmosphere comprising oxygen, it also eliminates the need for evacuating the system prior to use or introducing an inert gas in the system.

A method for carbonizing organic material is disclosed. The method comprises:
a. providing an organic feedstock to a carbonization reactor,
b. providing a gas comprising oxygen to the carbonization reactor,
c. initiating an exothermic reaction in the carbonization reactor,
d. removing a carbonization product from the carbonization reactor, and
e. removing an oxygen deficient gas from the carbonization reactor;
characterized in that the method comprises utilizing at least two temperature sensors mounted at different heights of the carbonization reactor cannister.

In certain embodiments, the carbonization is performed in a continuous or semi-batch manner.

In certain embodiments, the organic feedstock is fed into the carbonization reactor at greater than atmospheric pressure.

In certain embodiments, the oxygen-deficient gas comprises
- 0-60% nitrogen
- 10-50% CO₂
- 0-50% H₂
- 10-50% CO
- 0-20% CH₄
- 0-5% Ethane
- 0-5% Ethylene
- 0-5% Heavier hydrocarbons.

In certain embodiments, the oxygen deficient gas comprises less than 5 % oxygen.

In certain embodiments, the gas comprising oxygen is added to the carbonization reactor at greater than atmospheric pressure.

In certain embodiments, the gas comprising oxygen may be air. In certain embodiments, the gas comprising oxygen may be a gas comprising more than 21% oxygen. In certain embodiments, the organic feedstock is added to the carbonization reactor in a continuous manner.

In certain embodiments, the organic feedstock is mixed with an inorganic material prior to addition to the reactor.

In certain embodiments, the carbonization product is removed from the carbonization reactor in a continuous or semi-batch manner.

In certain embodiments, the addition of organic feedstock is done at a rate to maintain a constant level of feedstock in the reactor.

In certain embodiments, the carbonization product is continuously removed from the carbonization reactor.

Also disclosed herein is a carbonization product produced in the system of the present disclosure or using the method of the present disclosure.

In certain embodiments, the carbonization product is biochar or biocarbon. In certain embodiments the carbonization product is electrically conductive. In certain embodiments, the carbonization product may be activated carbon or activated biocarbon. In certain embodiments, the carbonization product may be subjected to activation to form activated carbon or activated biocarbon using any suitable activation treatment known to a person skilled in the art.

In certain embodiments, the carbonization product may be further enhanced by the inclusion of inorganic compounds or compositions in the product.

The method described in the current specification has the added utility of having properties suitable for the continuous or semi-batch carbonization of organic material. Operating the method in a continuous or semi-batch fashion eliminates the need for frequent loading and unloading of material to be carbonized as well as the carbonization product.

As the carbonization according to the method of the present disclosure operates in an atmosphere comprising oxygen, it also eliminates the need for evacuating the system prior to use or introducing an inert gas in the system.

A carbonization product comprising biocarbon formed in the system of the present disclosure or using the method of the present disclosure is also disclosed herein.

### EXAMPLES

Reference will now be made in detail to various embodiments.

The description below discloses some embodiments in such a detail that a person skilled in the art is able to utilize the embodiments based on the disclosure. Not all steps or features of the embodiments are discussed in detail, as many of the steps or features will be obvious for the person skilled in the art based on this specification.

### Example

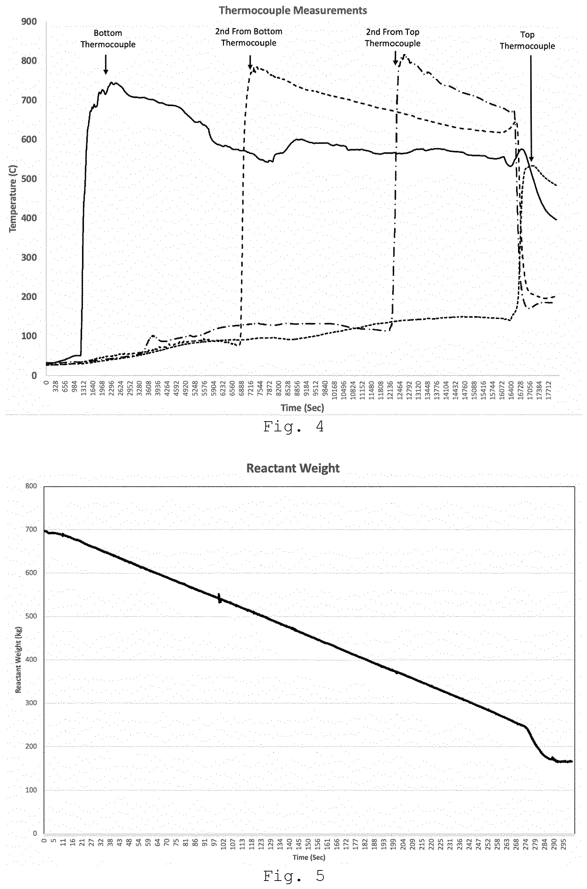

693kg of olive pit with a moisture content of 8.5 wt.-% containing approximately 332 kg of organic carbon was added to the carbonization reactor. The reactor was pressurized to 400kPa with compressed air from a pressure regulated source. The reactor was checked for leaks and the outlet valve opened to allow approximately 8m³/h of air to flow through the reactor. An electric heating coil at the bottom of the reactor was initiated for 5 minutes. Initiation of the carbonization reaction was evidenced by a rapid increase in reactor pressure that prevented the ingress of air from the regulated supply. The outlet valve was then opened to reduce the pressure in the reactor. When the reactor pressure dropped below 400kPa a controlled flow of air was added to the reactor to maintain a stable flow rate of air into the reactor while maintaining 400kPa of pressure within the reactor. Using the outlet valve and air control valves the flow of air was increased to 68m³/h while maintaining 400kPa in the reactor. The carbonization reaction is characterized by an exothermic thermal wave that propagates from the bottom of the reactor to the top over the span of 289 minutes as evidenced by the 4 rows of thermocouples spaced equidistantly from the bottom to the top of the reactor (Fig. 4). Further evidence of the linear nature of the reaction is evidenced by a steady weight loss measured by load cells mounted beneath the reactor (Fig. 5). The yield of carbon product was 165kg. Independent analysis of the product revealed a carbon content of 91.7%, atomic H:C ratio of 0.19 % and atomic O:C ratio of 0.024 %.

It is obvious to a person skilled in the art that with the advancement of technology, the basic idea may be implemented in various ways. The embodiments are thus not limited to the examples described above; instead, they may vary within the scope of the claims. The embodiments described hereinbefore may be used in any combination with each other. Several of the embodiments may be combined together to form a further embodiment. A method or a system, disclosed herein, may comprise at least one of the embodiments described hereinbefore. It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items. The term "comprising" is used in this specification to mean including the feature(s) or act(s) followed thereafter, without excluding the presence of one or more additional features or acts.

## Claims

1. A system for carbonizing organic material, wherein the system comprises:
a. a means for adding organic feedstock to a carbonization reactor,
b. a means for adding a gas comprising oxygen to the carbonization reactor,
c. a means for removing an oxygen-deficient gas from the carbonization reactor,
d. a means for initiating an exothermic reaction in the carbonization reactor, and
e. a means for removing a carbonization product from the carbonization reactor;
the system being **characterized by** at least two temperature sensors mounted at different heights of the carbonization reactor cannister.

2. The system of claim 1, wherein the means for initiating an exothermic reaction in the carbonization reactor is located at the opposite end of the carbonization reactor relative to the input of the gas comprising oxygen.

3. The system of any of the preceding claims, wherein the means for initiating an exothermic reaction in the carbonization reactor is an electric heating source.

4. Method for carbonizing organic material, wherein the method comprises:
a. providing an organic feedstock to a carbonization reactor,
b. providing a gas comprising oxygen to the carbonization reactor,
c. initiating an exothermic reaction in the carbonization reactor, and
d. removing a carbonization product from the carbonization reactor;
**characterized in that** the method comprises utilizing at least two temperature sensors mounted at different heights of the carbonization reactor cannister.

5. The method of claim 4, wherein the carbonization is performed in a continuous or semi-batch manner.

6. The method of any of claims 4 - 5, wherein the organic feedstock is fed into the carbonization reactor greater than atmospheric pressure.

7. The method of any of claims 4 - 6, wherein gas comprising oxygen is added to the reactor at greater than atmospheric pressure.

8. The method of any of claims 4 - 7, wherein the organic feedstock is added to the carbonization reactor in a continuous manner.

9. The method of any of claims 4 - 8, wherein the organic feedstock is mixed with an inorganic material prior to addition to the reactor.

10. The method of any of claims 4 - 9, wherein the carbonization product is removed from the carbonization reactor in a continuous or semi-batch manner.

11. The method of any of claims 4 - 10, wherein the addition of organic feedstock is done at a rate to maintain a constant level of feedstock in the reactor.

## Patentansprüche

1. System zum Karbonisieren von organischem Material, wobei das System Folgendes umfasst:
a. eine Einrichtung zum Zusetzen von organischem Einsatzmaterial zu einem Karbonisierungsreaktor,
b. eine Einrichtung zum Zusetzen eines sauerstoffhaltigen Gases zu dem Karbonisierungsreaktor,
c. eine Einrichtung zum Entfernen eines sauerstoffarmen Gases aus dem Karbonisierungsreaktor,
d. eine Einrichtung zum Auslösen einer exothermen Reaktion in dem Karbonisierungsreaktor und
e. eine Einrichtung zum Entfernen eines Karbonisierungsprodukts aus dem Karbonisierungsreaktor;
wobei das System **dadurch gekennzeichnet ist, dass** mindestens zwei Temperatursensoren auf unterschiedlichen Höhen des Karbonisierungsreaktorkanisters montiert sind.

2. System nach Anspruch 1, wobei die Einrichtung zum Auslösen einer exothermen Reaktion in dem Karbonisierungsreaktor an dem gegenüberliegenden Ende des Karbonisierungsreaktors bezogen auf den Eintrag des sauerstoffhaltigen Gases angeordnet ist.

3. System nach einem der vorhergehenden Ansprüche, wobei die Einrichtung zum Auslösen einer exothermen Reaktion in dem Karbonisierungsreaktor eine elektrische Heizquelle ist.

4. Verfahren zum Karbonisieren von organischem Material, wobei das Verfahren Folgendes umfasst:
a. Bereitstellen eines organischen Einsatzmaterials an einen Karbonisierungsreaktor,
b. Bereitstellen eines sauerstoffhaltigen Gases an den Karbonisierungsreaktor,
c. Auslösen einer exothermen Reaktion in dem Karbonisierungsreaktor und
d. Entfernen eines Karbonisierungsprodukts aus dem Karbonisierungsreaktor;
**dadurch gekennzeichnet, dass** das Verfahren Einsetzen von mindestens zwei Temperatursensoren umfasst, die auf unterschiedlichen Höhen des Karbonisierungsreaktorkanisters montiert sind.

5. Verfahren nach Anspruch 4, wobei die Karbonisierung kontinuierlich oder im Semi-Batch-Verfahren durchgeführt wird.

6. Verfahren nach einem der Ansprüche 4 - 5, wobei das organische Einsatzmaterial in den Karbonisierungsreaktor größer als Atmosphärendruck eingespeist wird.

7. Verfahren nach einem der Ansprüche 4 - 6, wobei sauerstoffhaltiges Gas dem Reaktor bei mehr als Atmosphärendruck zugesetzt wird.

8. Verfahren nach einem der Ansprüche 4 - 7, wobei das organische Einsatzmaterial dem Karbonisierungsreaktor auf kontinuierliche Weise zugegeben wird.

9. Verfahren nach einem der Ansprüche 4 - 8, wobei das organische Einsatzmaterial vor dem Zusetzen zu dem Reaktor mit einem anorganischen Material gemischt wird.

10. Verfahren nach einem der Ansprüche 4 - 9, wobei das Karbonisierungsprodukt kontinuierlich oder im Semi-Batch-Verfahren aus dem Karbonisierungsreaktor entfernt wird.

11. Verfahren nach einem der Ansprüche 4 - 10, wobei das Zusetzen von organischem Ausgangsmaterial mit einer Rate erfolgt, um einen konstanten Pegel des Ausgangsmaterials in dem Reaktor aufrechtzuerhalten.

## Revendications

1. Système de carbonisation de matériau organique, dans lequel le système comprend :
a. un moyen pour ajouter une matière première organique à un réacteur de carbonisation,
b. un moyen pour ajouter un gaz comprenant de l'oxygène au réacteur de carbonisation,
c. un moyen pour retirer un gaz pauvre en oxygène du réacteur de carbonisation,
d. un moyen pour initier une réaction exothermique dans le réacteur de carbonisation, et
e. un moyen pour retirer un produit de carbonisation du réacteur de carbonisation ;
le système étant **caractérisé par** au moins deux capteurs de température montés à différentes hauteurs de la cuve de réacteur de carbonisation.

2. Système selon la revendication 1, dans lequel le moyen pour initier une réaction exothermique dans le réacteur de carbonisation est situé à l'extrémité opposée du réacteur de carbonisation par rapport à l'entrée du gaz comprenant de l'oxygène.

3. Système selon l'une quelconque des revendications précédentes, dans lequel le moyen pour initier une réaction exothermique dans le réacteur de carbonisation est une source de chauffage électrique.

4. Procédé de carbonisation de matériau organique, dans lequel le procédé comprend :
a. la fourniture d'une matière première organique à un réacteur de carbonisation,
b. la fourniture d'un gaz comprenant de l'oxygène au réacteur de carbonisation,
c. le retrait d'une réaction exothermique dans le réacteur de carbonisation, et
d. l'élimination d'un produit de carbonisation du réacteur de carbonisation ;
**caractérisé en ce que** le procédé comprend l'utilisation d'au moins deux capteurs de température montés à différentes hauteurs de la cuve du réacteur de carbonisation.

5. Procédé selon la revendication 4, dans lequel la carbonisation est exécutée de manière continue ou semi-discontinue.

6. Procédé selon l'une quelconque des revendications 4 et 5, dans lequel la matière première organique est introduite dans le réacteur de carbonisation à une pression supérieure à la pression atmosphérique.

7. Procédé selon l'une quelconque des revendications 4 à 6, dans lequel un gaz comprenant de l'oxygène est ajouté au réacteur à une pression supérieure à la pression atmosphérique.

8. Procédé selon l'une quelconque des revendications 4 à 7, dans lequel la matière première organique est ajoutée au réacteur de carbonisation de manière continue.

9. Procédé selon l'une quelconque des revendications 4 à 8, dans lequel la matière première organique est mélangée à un matériau inorganique avant l'ajout au réacteur.

10. Procédé selon l'une quelconque des revendications 4 à 9, dans lequel le produit de carbonisation est retiré du réacteur de carbonisation de manière continue ou semi-discontinue.

11. Procédé selon l'une quelconque des revendications 4 à 10, dans lequel l'ajout de matière première organique est effectué à un débit permettant de maintenir un niveau constant de matière première dans le réacteur.
